# EUROPEAN PATENT SPECIFICATION

(11) **EP 3 550 742 B1**
(45) Date of publication and mention of the grant of the patent: **15.07.2020**
(21) Application number: 18165553.1
(22) Date of filing: 03.04.2018
(51) Int. Cl.: H04J 3/06

(54) **OPTICAL NETWORK UNIT ACTIVATION**
OPTISCHE NETZWERKEINHEITSAKTIVIERUNG
ACTIVATION D'UNITÉ DE RÉSEAU OPTIQUE

(43) Date of publication of application: 09.10.2019
(73) Proprietor: Nokia Solutions and Networks Oy, 02610 Espoo (FI)
(72) Inventor: Pfeiffer, Thomas, 70435 Stuttgart (DE); Borkowski, Robert, 70435 Stuttgart (DE); Bonk, Rene, 70435 Stuttgart (DE); Schmuck, Harald, 70435 Stuttgart (DE)
(74) Representative: MERH-IP Matias Erny Reichl Hoffmann Patentanwälte PartG mbB

(56) References cited:
- EP-A1- 2 448 152
- EP-A1- 2 493 103
- EP-A2- 0 616 444
- "Phoneline networking transceivers - Isolation function; G.989.3 (2015) Amendment 1 (11/16)", ITU-T STANDARD, INTERNATIONAL TELECOMMUNICATION UNION, GENEVA ; CH , no. G.989.3 (2015) Amendment 1 (11/16) 13 November 2016 (2016-11-13), pages 1-266, XP044190113, Retrieved from the Internet: URL:http://mirror.itu.int/dms/pay/itu-t/re c/g/T-REC-G.989.3-201611-I!Amd1!PDF-E.pdf [retrieved on 2017-04-05]

## Description

### TECHNICAL FIELD

The present disclosure relates to an activation of an optical network unit, ONU, in a time division multiplexing, TDM, passive optical network, PON. In particular, the present disclosure relates to ONU ranging in a TDM-PON.

### BACKGROUND

As recommended in ITU-T G.989.3 (cf. section 13), ONU activation may be based on two steps:
- ONU discovery (serial number acquisition); and
- ONU ranging.

The serial number acquisition step may comprise singling-out one ONU, if multiple ONUs request activation at the same time, and determining the serial number of the singled-out ONU. During ranging, the distance of the singled-out ONU relative to the OLT may be measured to determine an equalization delay for the ONU. When applied, the equalization delay may compensate for different distances between different ONUs and the OLT and thus ensure that all ranged ONUs have the same "virtual" distance from the OLT. In other words, the equalization delay may ensure that all traffic from the ranged ONUs arrives at the OLT within the prescribed/assigned time slots.

To avoid collisions between a response to a serial number/ranging grant and regular upstream bursts from activated (in-service) ONUs, G.989.3 (cf. section 13.1) recommends enforcing a quiet window, during which upstream transmissions by the activated ONUs are temporarily suppressed. The start of the quiet window is to be chosen in accordance with the minimum round-trip propagation delay (also referred to as "round-trip time" or "round-trip delay" in the following) and the minimum ONU processing time, as well as the (dynamically generated) start time of the grant. Moreover, the size of the quiet window depends on the maximum variation of the (unknown) round-trip time (associated with the "differential distance" between ONUs). This ONU activation process in TDM-PON (e.g. XGS-PON and TWDM-PON) interrupts the upstream traffic for typically >200 µsec. These interrupt-induced latencies add to the transmission round trip time (order of 200 µsec), and may exceed the acceptable values for some applications. Document EP 0 616 444 A2 refers to a PON using a TDMA frame structure and comprising a main station and a number of substations. Coarse ranging is done at a fixed position (CR) within an upstream multiframe reserved for ranging. By applying a low power Pseudo Noise Sequence for coarse ranging and sampling the range at the side of the main station only within the fine ranging window (CR), the position of which is known to the main station, the coarse ranging is achieved.

### SUMMARY

While the quiet window ensures that serial number/ranging grant traffic does not interfere with regular upstream traffic, enforcing the quiet window also increases the overall latency of the regular upstream traffic. As this may prohibit latency-sensitive applications, the present disclosure is directed at reducing the interference of ONU activation with ongoing upstream traffic and reducing latency during ONU activation, e.g. by reducing the size of the quiet window.

In accordance with the present disclosure, a method of ranging an ONU in a TDM-PON may comprise:
- transmitting, by the ONU, a localization sequence to an OLT, the localization sequence comprising a multitude of unique subsequences,
- identifying, by the OLT, a received subsequence of the multitude of unique subsequences during a time-window which is reserved, by the OLT, for ranging, and
- ranging, by the OLT, the ONU based on a position of the received subsequence within the localization sequence, wherein the duration of the localization sequence is longer than the duration of the time-window which is reserved for ranging.

By responding to an activation grant with a localization sequence that comprises a multitude of unique subsequences, identifying a single subsequence (in particular its position in the localization sequence and its timing) may be sufficient to determine the timing of the localization sequence, and in consequence the round-trip time and the distance between ONU and OLT. As a result, the duration of the time window which is reserved for ranging (i.e., the quiet window, also called empty window in the following) becomes independent of a variation of round-trip delays associated with different ONUs within the TDM-PON.

The localization sequence may be a bit sequence allowing to uniquely identify the position of any subsequence of a certain length relative to the start of the localization sequence.

Accordingly, the duration of the quiet/empty window may be reduced to the duration of a single subsequence (of the certain length).

The upstream data traffic to the OLT may be organized in PON-frames, each lasting e.g. 125 µs. An upstream transmission window may be provided for ONU activation. The upstream transmission window comprises the empty window reserved for ONU ranging. The upstream transmission window may comprise multiple PON frames, i.e. there is an empty window in every n-th PON frame. For example, n=i, i.e. one upstream transmission window = one PON frame. Moreover, in some embodiments, the duration/length of the localization sequence (transmitted by the ONU) may be conveniently chosen substantially equal to the duration of one upstream transmission window. However, the length of the localization sequence may also be shorter than the upstream transmission window; but in this case, the localization sequence should be transmitted at the periodicity of the upstream transmission window.

For example, if substantially each upstream transmission window comprises a time-window which is reserved for ranging, a process for ONU activation may start in substantially any upstream transmission window (e.g. any PON frame for n=i). Moreover, averaging over multiple empty windows of an averaging cycle is possible if the localization sequence is transmitted multiple times and corresponding empty windows are provided in consecutive upstream transmission windows.

The method may further comprise detecting, by the OLT, transmissions of multiple localization sequences from different ONUs during one upstream transmission window and transmitting, by the OLT, a request to delay a retransmission of one or more of said multiple localization sequences by one or more ONUs until after a succeeding upstream transmission window. In embodiments, the ONUs may use the same localization sequence for ranging which may be announced by the OLT in a respective message. Alternatively, each ONU may use a distinctive localization sequence which is known to the OLT.

Accordingly, one ONU may be singled-out by suppressing the response(s) of one or more other ONUs to activation grants for a period during which ranging (activating) the singled-out ONU can be completed.

The method may further comprise transmitting again, by the ONU, the localization sequence in a later upstream transmission window to the OLT. In embodiments employing averaging, the localization sequence may be re-transmitted after completion of an averaging cycle. The localization sequence may be re-transmitted with a delay within (relative to) the respective upstream transmission window. The applied delay is thus smaller than the upstream transmission window. The method may further comprise, by the OLT, identifying another received subsequence of the re-transmitted localization sequence within the reserved time-window (due to the delay with respect to the sequence sent previously), determining the delay based on the position of the subsequence and the position of the another received subsequence within the reserved time-windows of the respective upstream transmission windows, and identifying the ONU based on the delay.

Hence, an unknown ONU may be identified based on the positions of the respective subsequences detected by the OLT during the empty window. The delay corresponding to the detected subsequence positions may be unique (e.g. randomly chosen) and thereby allowing identification of the ONU.

A plurality of ONUs may be registered in the PON and the OLT may repeatedly poll subgroups of ONUs to send test signals until a single ONU is left.

Accordingly, one ONU may be singled-out by iteratively requesting ONUs to stop transmitting the localization sequence (e.g., for a predetermined interval or until receipt of further notice).

The ONU may transmit the localization sequence to the OLT during ranging at a first transmission power, and the ranged (activated) ONU may subsequently transmit user data (payload data) to the OLT at a second transmission power, wherein the second transmission power is higher than the first transmission power.

Transmitting the localization sequence and the regular upstream traffic (i.e. upstream traffic sent after activation) at a different transmission power may reduce the interference between the localization sequence of an ONU requesting activation and activated ONUs that transmit regular upstream traffic.

The method may further comprise transmitting, by the ONU, the localization sequence at least twice in consecutive upstream transmission windows to the OLT. The transmission of the localization sequence many be by transmission of corresponding localization signals by the ONU. Moreover, the step of receiving the subsequence of the multitude of unique subsequences during the empty time-window may comprise multiple receipts of corresponding localization signals sent by the ONU in consecutive upstream transmission windows. The step of ranging the ONU may comprise averaging the localization signals received in a plurality of empty windows from the ONU in order to identify the subsequences within the localization sequence. In other words, signals received during empty windows may be averaged by the OLT to improve signal quality, and the averaged signals employed for detection of subsequences.

Hence, ranging precision may be increased by signal averaging, and adverse effects resulting from a reduced transmission power during ranging may be (partially) compensated.

An OLT for use in a TDM-PON in which upstream ONU activation data to the OLT is organized in upstream transmission windows may be configured to:
- reserve a time-window within an upstream transmission window for ranging, wherein the time-window is shorter than a maximum variation in ONU round-trip time, the maximum variation in ONU round-trip time being a difference between a maximum round-trip time for an ONU which is placed at a maximum distance from the OLT within the TDM-PON, and a minimum round-trip time for an ONU which is placed at a minimum distance from the OLT,
- identify a received subsequence of a localization sequence from an ONU during the reserved time-window, and
- range the ONU based on a position of the received subsequence within the localization sequence.

The OLT may comprise a multi-rate receiver. The multi-rate receiver may operate at different signal levels and bit rates. For detection of 10Mbit/s localization signals representing the localization sequence, for example, Rx power at - 65 dBm to -50 dBm may be chosen. Regular data signals may be received with 10Gbit/s at approx. -25 dBm.

Alternatively, the OLT may comprise a first optical receiver for receiving optical signals during the time-window which is reserved for ranging and a second optical receiver, different from the first optical receiver, for receiving optical signals during a data transmission window before and/or after the time-window reserved for ranging, wherein the optical receivers have different receive sensitivities. The first optical receiver may be a narrowband receiver for low bit rate transmission.

The OLT may be further configured to average a plurality of localization signals from the ONU corresponding to localization sequences received during multiple time-windows reserved for ranging in multiple upstream transmission windows and calculate an equalization delay for the ONU based on the distance of the ONU calculated from averaged localization signals of the ONU. The localization signals may be averaged in the electrical domain after o/e conversion and sampling. The OLT may apply a signal detection algorithm on the measured localization signals to identify a subsequence of a localization sequence from an ONU during the reserved time-window.

An ONU for use in a TDM-PON, where upstream data traffic to an OLT is organized in upstream PON frames, the ONU may be configured to:
- transmit a localization sequence to the OLT at a first transmission power in an upstream transmission window, the localization sequence comprising a multitude of unique subsequences, the transmission duration of the localization sequence being larger than the duration of a time-window that is reserved for ranging the ONU;
- receive an indication of an equalization delay from the OLT; and
- transmit upstream data at a second transmission power, higher than the first transmission power, at a start time in an upstream PON frame, wherein the start time in the upstream PON frame is determined based on the received equalization delay.

The upstream data for activating and ranging of the ONU may be organized in upstream transmission windows. The ONU may be further configured to delay a retransmission of the localization sequence in a later upstream transmission window by a fixed or random number of upstream transmission windows in response to a corresponding request received from the OLT. In case of averaging, the delay is larger than an averaging cycle so that ranging of a first ONU (including averaging) can be completed before the ranging of another ONU starts (after the applied delay).

The ONU may be further configured to, after transmitting a localization sequence to the OLT, re-transmit the localization sequence to the OLT, wherein the re-transmitted localization sequence is transmitted with a random delay chosen by the ONU within the upstream transmission window (the delay smaller than the upstream transmission window), receive a message from the OLT indicating a delay value associated with receipt of a localization sequence; and determine whether the received delay value matches the chosen random delay, and in the affirmative case (i.e. when the received delay value is confirmed to be the chosen random delay) determine that the OLT has detected the localization sequences sent from the ONU.

Moreover, it will be appreciated that the details of the disclosed devices/network can be implemented as a method and vice versa. Furthermore, the device/network features may achieve similar advantages as the corresponding method steps, as the skilled person will appreciate.

In addition, it is noted that the disclosed ranging process may further deviate from the ranging process recommended in G.989.3 in that the serial number of the ONU may be transmitted only after an initial (coarse) ranging has been completed to reduce bandwidth/quiet window duration requirements of the initial ranging. For example, initial ranging may be performed at 10 Mb/s with an empty window duration of 3.5µs, where the bitrate may be too small to transmit the serial number within the empty window.

After the initial ranging (which may provide a precision of, for example, 50 - 100 ns), a serial number grant response may be transmitted by the ONU (unless the serial number of the requesting ONU is already available at the OLT) at full bitrate (and full transmission power), wherein the offset of the serial number grant response may be determined based on the initial ranging, such that the (whole) serial number grant response is received during the quiet/empty window. Similarly, a ranging grant response may be transmitted by the ONU after the initial ranging at full bitrate (and full transmission power), wherein the offset of the serial number grant response may be determined based on the initial ranging, such that the (whole) ranging grant response is received during the quiet/empty window.

Accordingly, two steps may be added to (and precede) the activation procedure recommended in G.989.3:
- a step of reducing the number of ONUs requesting activation in the same quiet window to a single ONU, and
- a step of initial (coarse) ranging based on a localization sequence comprising a multitude of unique subsequences (preferably at a reduced transmission power/bitrate, e.g., 10 Mb/s).

After said steps, the activation procedure may be continued by a step of serial number acquisition and assignment of an ONU-ID (unless the ONU has already an assigned ID). After that, a step of fine ranging may be performed, wherein the whole ranging grant response is received during the empty window at normal bitrate (e.g., 10 Gb/s).

The present disclosure also relates to a passive optical network, PON, comprising an OLT and at least one ONU as disclosed above.

Furthermore, implementations of the devices/network may include, but are not limited to, one or more processor, one or more application specific integrated circuits (ASICs) and/or one or more field programmable gate arrays (FPGAs). Implementations of the devices/network may also include using other conventional and/or customized hardware such as software programmable processors.

### BRIEF DESCRIPTION OF THE DRAWINGS

The foregoing aspects and many of the attendant advantages of this document will become more readily appreciated as the same becomes better understood by reference to the following detailed description, when taken in conjunction with the accompanying drawings.
Fig. 1 illustrates determining a round-trip time based on a detected subsequence of a localization sequence according to an embodiment.
Fig. 2 illustrates averaging over multiple subsequences according to an embodiment.
Fig. 3 shows an embodiment of a method for activating a ONU in a single-channel TDM-PON.
Fig. 4 shows an overview of states in a ranging process according to an embodiment.
Fig. 5 illustrates a process for singling-out one ONU according to an embodiment.
Fig. 6 and Fig. 7 illustrate another process for singling-out one ONU according to an embodiment.
Fig. 8 shows a flow-chart of the process for initial (coarse) ranging according to an embodiment.

### DETAILED DESCRIPTION

Future telecommunication networks will increasingly call for ultra-low latency connections in metro and access networks, e.g. low latency fronthaul links will be essential in future 5G C-RAN architectures. Likewise, certain new services in 5G networks will require low end-to-end latencies (URLLC: Ultra-reliable low latency communication). In either case, the one-way latency for transport across the fixed network shall typically be in the order of only 100 µs. With current implementations of TDM-PON (GPON, XGS-PON, TWDM-PON) the above latency requirements cannot be met due to the ranging process which allows new ONUs to join the network during operation. In GPON and its successor technologies this ranging process is based on switching off the upstream traffic on the entire PON for a certain time ("quiet window", lasting typically for 2-4 PON frames, i.e. (2 ... 4) x 125 µsec) during which new ONUs can make themselves known to the network and get ranged. This quiet time adds to the delays which are anyway caused by the system protocol and fiber transmission, finally resulting in overall latency values well into the range of 1 msec which is more than can be tolerated by the 5G network.

In this disclosure we propose an alternative ranging process for GPON, XGS-PON and alike TDM-PON variants that does not interrupt the upstream traffic and thus allows for keeping the optical transport induced delay at an acceptable level.

As described above, ranging new ONUs in a TDM-PON may be accomplished by inserting empty windows in the upstream transmission window, wherein each empty window interrupts the regular upstream traffic. One possible option to avoid these interruptions is to employ two PON channels, where one channel ("ranging channel") is used for ranging, while the other channel ("working channel") can be used for uninterrupted (hence low latency) upstream data transmission.

The information collected from the ranging channel can be used for assigning the newly ranged ONUs to transmission slots in the working channel. If, e.g., an XGS-PON channel is operating in ultra-low latency mode, a GPON channel, being operated on the same fiber, can be used for ranging the ONUs that require access to the XGS-PON channel. Likewise, in TWDM-PON, one wavelength channel can be used for transporting ultra-low latency traffic, while another wavelength channel in the same system can be used for ranging. However, this requires that the ONUs are connected to two different PON channels, and thus necessitates two optical modules and associated hardware and software functionalities for each ONU.

The present disclosure, however, only requires a single PON channel and allows regular, operational (activated) ONUs to work uninterrupted. Already activated ONUs work uninterrupted, since they are assigned time slots which will never be affected by the ranging process, while the new ONUs are activated using time slots which are never assigned to any activated ONU. This can be achieved by configuring new (to be activated) ONUs to transmit continuous (low bit rate and/or low power level) signals for initial (coarse) ranging. The transmitted signals may be specific pulse sequences (localization sequences) that allow for uniquely identifying the relative position of any sub-sequence of a certain (minimal) length within the localization sequence.

The localization sequences can, for instance, be chosen from the family of m-sequences (e.g. PRBSs: pseudo-random bit sequences) or de Bruijn sequences of suitable order. For example, for an m-sequence of order k (length 2^k-1) the position of any sub-sequence of length k can be uniquely determined. Therefore, the m-sequence can be used as a "timing ruler" for the ranging process. All ONUs that must be ranged may transmit the same localization sequence. This sequence can either be agreed upon beforehand (e.g. in accordance with an implemented standard) or can be announced in a broadcast message from the OLT to all ONUs.

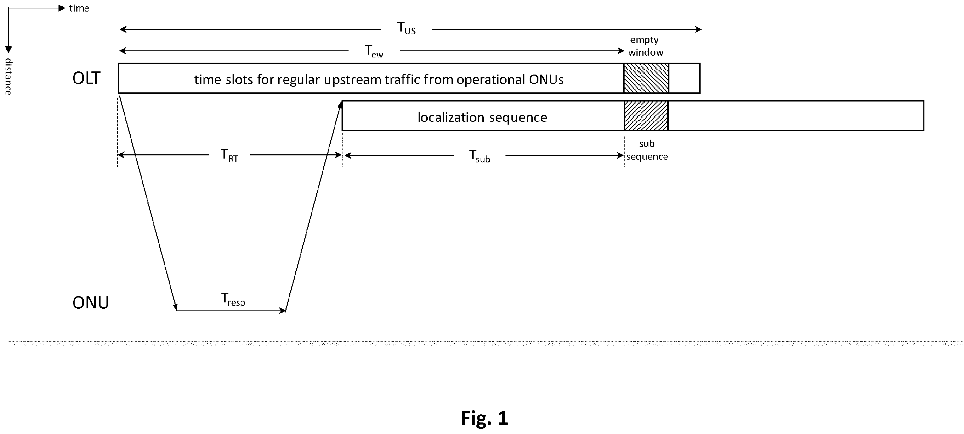

As illustrated in Fig. 1, the OLT may assign certain time slots (PON frames) to the operational (activated) ONUs for transmitting their up-stream data. A repetitive (short) time-window for ranging (i.e., an "empty window" which may last a few µsecs, for example) is reserved and excluded from regular upstream traffic. The empty window may be scheduled once per upstream transmission window T_{US} or once per multiple upstream transmission windows T_{US}. The upstream transmission window may be provided for ONU activation. The upstream transmission window may comprise multiple PON frames, i.e. there is an empty window in every n-th PON frame. For example, if n=i, one upstream transmission window corresponds to one PON frame. A specific sub-sequence detected within this empty window may allow the OLT to determine a transmission delay for an ONU that transmitted the corresponding localization sequence. For example, the round-trip time may be calculated as T_{RT} = T_{ew} - T_{sub}. As shown in Fig. 1, the round-trip time may include the ONU response time Tᵣₑₛₚ, which may be predefined (e.g., 35 ± 1 µsec). T_{ew} is the time at the OLT from the start of the upstream transmission window to the empty window. Tᵤₛ is the duration of the upstream transmission window and T_{sub} is the time from the start of the localization sequence to the position where the sub-sequence is identified.

In order to avoid ambiguities in deducing the ONU location from the detected sub-sequence, the duration of the upstream transmission window as well as the position of the empty window within may be adapted to the round trip times over the fiber link, e.g. take into account the round trip propagation delay of the ONU being farthest away from the OLT (PDₘₐₓ), or more generally, take into account the maximal differential distance between ONUs. The length of the localization sequence (transmitted by the ONUs) may be identical to the duration of the upstream transmission window; or more generally, it can be shorter under certain conditions, but in this case must be transmitted at the periodicity of the upstream transmission window. For convenience, Tus can be chosen to be an integer multiple of the PON frame (i.e. T_{US} = n^{∗}125 µs in GPON et al.). The empty window may be positioned towards the end of the upstream transmission window such as to meet the requirement T_{ew} ≥ Tᵣₑₛₚ + PDₘₐₓ.

In the embodiment shown in Fig. 1, the ONU transmits a predefined localization sequence of length T_{US} to the OLT, after receiving downstream frame from the OLT, including an activation grant. For example, the localization sequence is a m-sequence of length = 2^k-1 and the upstream transmission window duration T_{US} = n ^{∗} 125 µs (with n≥1). The localization sequence is a bit sequence allowing for uniquely identifying the position T_{sub} of any sub-sequence of a certain length relative to the localization sequence. For example, a m-sequence of length 2^k-1 allows for unambiguously identifying position of any k-bit sub-sequence. The ONU may transmit the localization sequence with a duration equal to the length of the upstream transmission window e.g. the upstream transmission window Tᵤₛ = n ^{∗} upstream PON frame duration (with n to be specified). The OLT identifies the sub-sequence falling into the empty window at T_{ew} and determines its position T_{sub}. The OLT determines the round trip time: T_{RT} = T_{ew} - T_{sub} (this includes the ONU response time Tᵣₑₛₚ = 35 ± 1 µsec as set by the OLT).

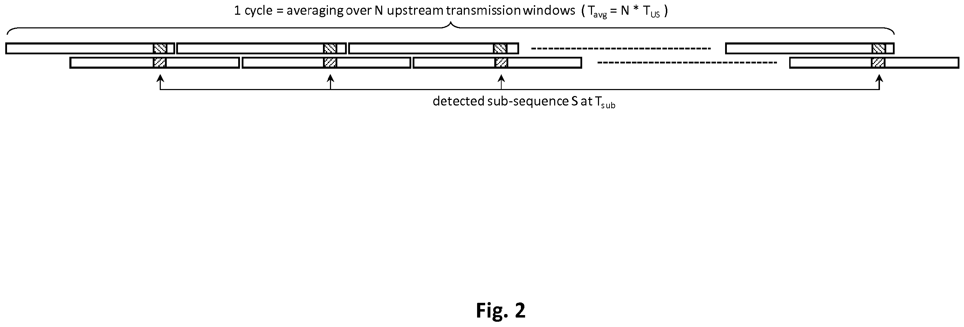

Since the localization sequences may be transmitted continuously (and overlap with regular upstream traffic), their optical power may have to be sufficiently smaller than the optical power of the regular upstream traffic. Otherwise, the regular upstream traffic of the other operational ONUs arriving outside the empty window at the OLT may be disturbed. For example, the localization sequence may be received at -25 to -20 dB below the power of the regular upstream traffic at the OLT receiver. Taking available PON system specifications for reference, the received test signal power may, for example, be in the range of -65 dBm to -50 dBm. Hence, the detection of the localization sequence may benefit from using low bit rate signals (e.g., 10 Mbit/s) and/or from averaging over many repetitions N of the localization sequence (e.g. 1000 to 10000 times) as illustrated in Fig. 2 which illustrates one averaging cycle. The averaging cycle allows for enabling "error-free" localization of sub-sequences by increasing detection reliability. In the example shown in Fig. 2,1 averaging cycle = averaging over N upstream transmission windows (T_{avg} = N ^{∗} T_{US}). Hence, a measurement performed by averaging may take a few seconds. Averaging may include averaging localization signals received in a plurality of empty windows from the ONU in order to improve signal quality for identifying the subsequences within the localization sequence.

In embodiments, a proposed ONU activation process may comprise the following activities: The ONUs repeatedly transmit a predefined localization sequence at low bit rate and at very low power, which is averaged at the OLT over e.g. 1 sec. The OLT evaluates sub-sequences of the predefined localization sequence detected during a short empty window in every upstream transmission window (e.g. each n-th PON frame). Once an ONU is discovered and singled out, the ONU performs micro-ranging, similar to standardized process, however, restricted to the short empty window. There is no additional induced latency for activated ONUs.

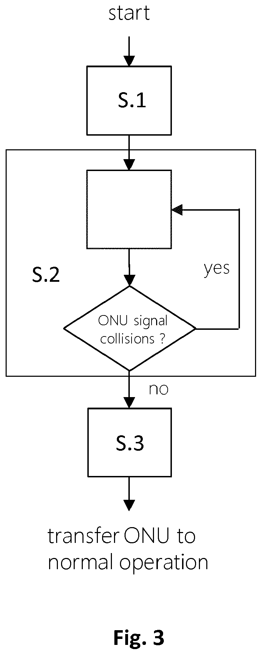

Fig 3 shows a flow-chart for an embodiment of a method for activating a ONU in a single-channel TDM-PON that supports low latency applications. The figure summarizes the method on a high level using the above disclosed aspects. The method has 3 steps S.1 to S.3 and starts with ONU activation in an empty window as explained above. The method ends with the transfer of the new ONUs to normal operation outside the empty window.

Step S.1 relates to downstream synchronization, including transmission of an localization sequence (also called localization sequence) to be used by new ONUs. In this step, the OLT sends the localization sequence to be used for the activation process to the ONUs.

Step S.2 relates to ONU discovery without serial number acquisition. The ONUs respond to activation grants received from OLT. The OLT singles out one ONU, not yet knowing its serial number. A quiet window with a duration <4 µs per upstream frame is used. The length of the quiet window is independent of absolute or differential ONU distances.

Step S.3 relates to serial number acquisition and micro-ranging. The serial number acquisition and precise ranging is performed at full bit rate (10G) and at full power levels, however restricted to arrival times at the OLT receiver within empty window. The coarse distance information collected in step S.2 may be used for this purpose. Again, a quiet window with a duration <4 µs per upstream frame is used and the length of the quiet window is independent of absolute or differential ONU distances.

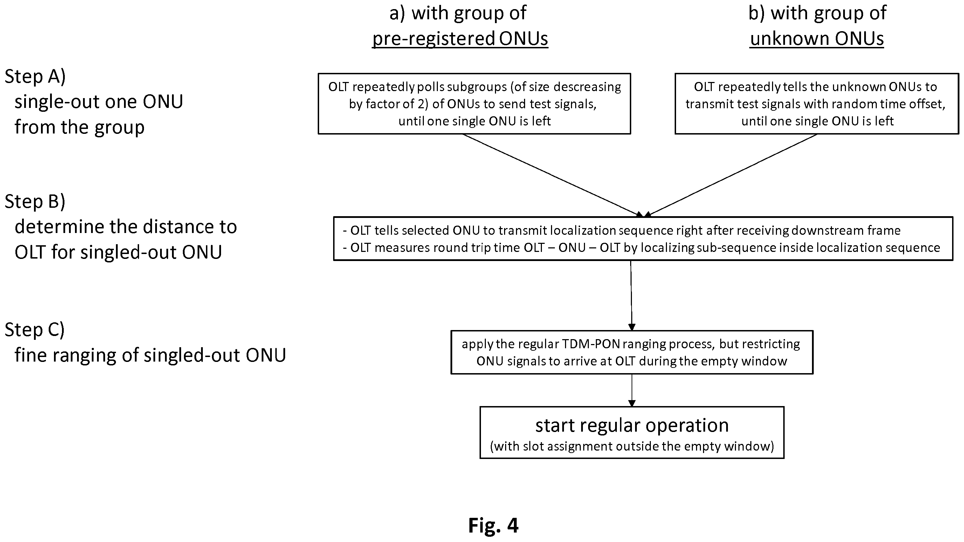

Fig. 4 shows an overview of states in an ONU activation process for multiple ONUs according to an embodiment. If dealing with multiple ONUs that are to join the PON at the same time, two scenarios may occur:
a) the ONUs have been pre-registered and their IDs are known to the OLT, or
b) the ONUs are unknown to the OLT.

In a first step (step A), one ONU is singled out from the group. In case of a group of pre-registered ONUs (case a)), the OLT repeatedly polls subgroups (of size decreasing by factor of 2) of ONUs to send test signals, until one single ONU is left. In case of unknown ONUs, the OLT repeatedly tells the unknown ONUs to transmit test signals with random time offset, until one single ONU is left. In the next step (step B), the distance to the OLT for the singled out ONU is determined. As described above, the OLT tells the selected ONU to transmit a localization sequence right after receiving a downstream frame. The OLT then measures the round trip time OLT - ONU - OLT by localizing a sub-sequence inside the localization sequence received during the empty window. Optional step C provides for a fine ranging of the singled out ONU by applying the regular TDM-PON ranging process, but restricting the ONU signals to arrive at the OLT during the empty window. These steps may be repeated until all new ONUs are ranged. Finally, the regular PON operation may start. The ranged ONUs are assigned with slot assignments outside the empty window to transmit payload data.

The above process may employ the following downstream messages before ranging:
1. an (optional) table containing pre-registered ONU serial numbers mapped to a set of small integer numbers, (the ONUs may use these numbers as test signal in step A). Alternatively, the ONUs may use ,alive' messages.
2. a localization sequence to be used by all ONUs in step B.

The following downstream messages during ranging may be used:
(i) messages to indicate start of ranging message with the next downstream frame (repeatedly, during different states); and
(ii) messages to tell ONUs to start with an additional random delay.

Upstream messages during ranging may be
in step A: either of serial number; small integer number representing serial number; or any ,alive' message; and
in step B: localization sequence.

In more detail, in step A, case a) it may be possible to single out one ONU from the group of pre-registered ONUs by applying the following process. The OLT may request a first sub-set (e.g., 50%) of the pre-registered ONUs to transmit a pre-defined (dummy) test signal (which may not necessarily be the localization sequence described above). For example, the (dummy) test signal may be a small integer number to which the serial number of the ONU is mapped in accordance with a table containing the pre-registered ONU serial numbers or an alive message. Then, the OLT may measure whether an optical signal is received (by one or more ONUs) or not. If yes, then the first sub-set may be further divided, and the process may be repeated with one of the resulting sub-sets.

If no power is received, then the OLT may request a second sub-set of pre-registered ONUs to transmit the pre-defined (dummy) test signal. If no transmit power is detected from this group either, the whole process stops and may be started all over again after some time (which may be configured by the network operator, for instance). If, however, power is detected, the split-and-poll procedure may be repeated with the second sub-set.

The process may be stopped if there is only one ONU left. As the OLT may address the ONUs by their ID, the information which ONU has been singled-out may already be available to the OLT. Hence, the relative distance (in time) from the OLT to the singled-out ONU may be determined in a next step in which the OLT requests the single-out ONU to transmit the localization sequence (e.g., in response to receiving the downstream PON frame).

The upstream transmission process may start immediately or within a pre-determined time interval (e.g., 35 +/-1 µsec) after receiving a downstream frame. This timing offset may be standardized and hence be identical for all ONUs (within +/-1 µsec) - within the PON. By identifying the sub-sequence received during the empty window, the OLT may be enabled to determine the round-trip time between the OLT and the ONU as described with reference to Fig. 1 and Fig. 2 above.

However, if the (averaged) round-trip time measurement is not precise enough for letting the new ONU join the regular operation, because the bit rate of the localization sequence is too low (e.g., 10 Mbit/s, allowing for a timing accuracy of only 50 nsec to 100 nsec), the accuracy may be improved in a consecutive step, by letting the OLT initiate a regular ranging process for the OLT as defined, for example, in G.989.3. However, due to the initial (coarse ranging), the regular ranging process may now be restricted to transmissions during the empty window (as seen by the OLT). After this, the ranged ONU may be assigned a time slot outside the empty window for regular operation.

In case b) the ONU selection process may start by requesting all new ONUs within the PON to transmit a localization sequence immediately (or after a pre-defined time interval) after receiving the downstream frame, as described above. Since there might be multiple ONUs transmitting at the same time, collisions might occur at the OLT receiver. Again, two cases may be considered:
b1) the collisions are so severe that the OLT cannot uniquely identify a sub-sequence, or
b2) the OLT can clearly identify a sub-sequence.

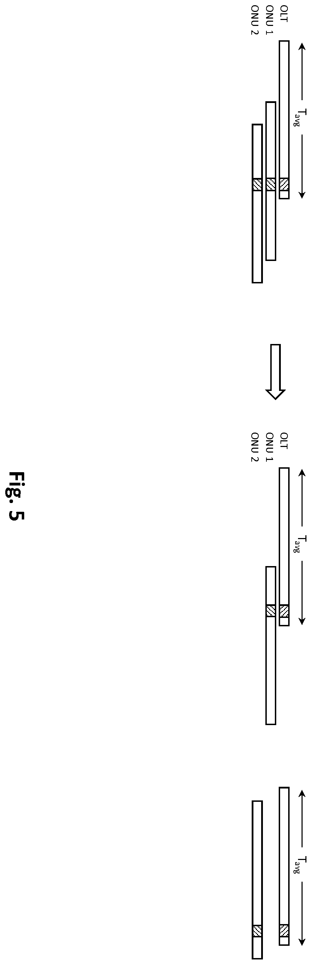

In case b1) the OLT may request the (unknown) ONUs to retransmit the localization sequence after waiting for a random delay (e.g., a random delay of a few seconds) as illustrated in Fig. 5. In this case, the random delay may correspond to a multiple of a full averaging cycle T_{avg} = N ^{∗} T_{US} for identifying a subsequence as shown in Fig. 2. This process to single out one ONU in presence of signal collisions at the OLT is particularly useful if there are multiple ONU signals of similar power arriving at the OLT, and localization of a test signal is not possible.

Fig. 5 illustrates an approach to single out one ONU in case of ONU signal collisions. The figure shows the signals of only two strong ONUs. There may be more signals from simultaneously emitting weaker ONUs along with strong ONUs. Each bar represents one full averaging cycle. The signals of ONUi and ONU2 arrive at different times due to different fiber distances. The detection of sub-sequences is impossible in this case due to collision of evenly strong signals at OLT narrow band receiver.

In this case, the OLT may tell the ONUs to re-transmit with random delay > T_{avg}. If in the second step the OLT can identify the subsequence, it then tells the ONUs that those who transmitted during the ,current' time slot of length T_{avg} will be taken to the next step, all others to remain quiet. In the next step(s) this procedure is repeated until there is only one ONU left. This singled out ONU is then taken to step B.

If one cycle of ranging an ONU has a duration of x seconds and the random delays are chosen within a range of, e.g., x seconds to 10x seconds, no overlap may occur in the next round (if there are only very few ONUs trying to connect at the same time, which is typically the case). If there are still severe collisions, the process may be repeated. Once the sub-sequence can be clearly detected, the OLT may inform the ONUs that those who had started transmitting x seconds ago (+/- few hundred microseconds to account for the different transmission times which are still unknown at this point) will be taken to the next step and that all others shall remain quiet from now on (for a predetermined time interval or until further notice). As there may be a weak ONU signal that was not noticed during detection, there might be multiple ONUs taken to the next step, which is the starting point for case b2).

In case b2) there may be a weak ONU signal disguised by a relatively stronger signal from another ONU which, for instance, experiences a smaller link loss. To exclude the possibility that the OLT continues the ranging process with more than one ONU, the OLT may request that all ONUs that have started transmitting the localization sequence x seconds ago (+/- few hundred microseconds) will be promoted to the next step and request all other ONUs which desire activation to remain quiet (for a pre-determined time interval or until further notice). Those promoted to the next step may be requested to retransmit the localization sequence while adding a random delay before starting retransmission. After two or three such cycles the probability will be extremely low that there are still multiple ONUs transmitting at the same time. At this point the OLT tells the (still unknown) ONU to transmit immediately after receiving the downstream frame.

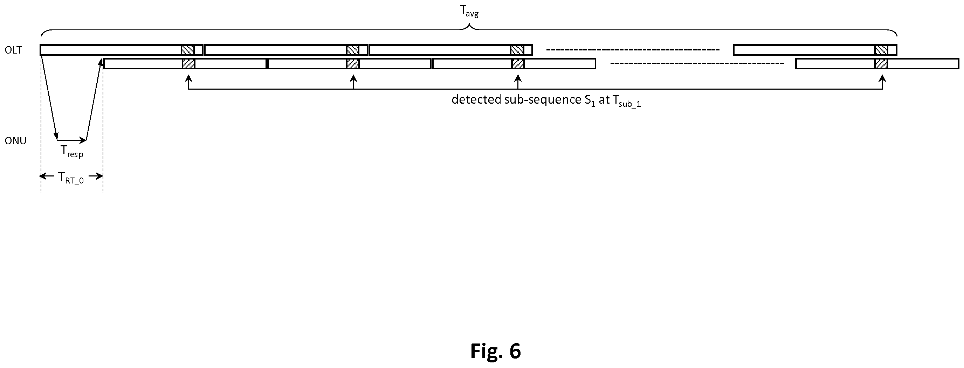

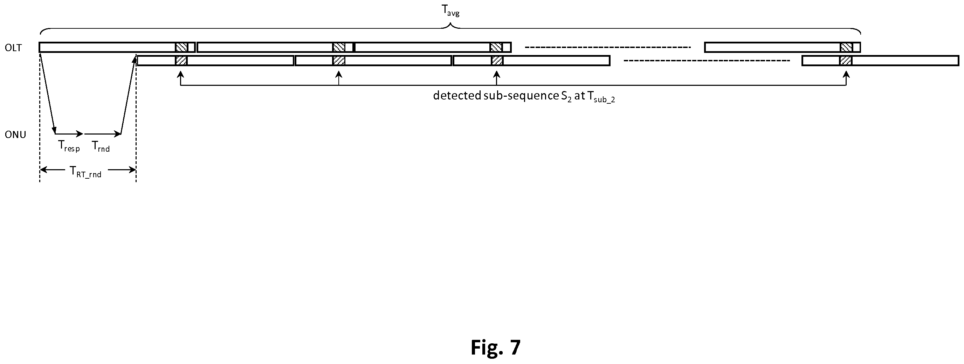

A process to single out one ONU in case of one dominant ONU signal is illustrated in Fig. 6 and Fig. 7. Fig. 6 shows the situation of one dominant ONU having a larger signal power responding together with other ONUs that experience a larger link loss (e.g. for being located at a larger distance from the OLT). The OLT mainly receives the signal of the dominant ONU (here sub-sequence S1 at T_{sub_1}) but with some superposition of signals from other ONUs. The OLT may detect that multiple ONUs have responded. In this situation the OLT may not know the identity of the dominant ONU and instruct the ONUs to each apply a random delay T_{rnd}. The ONUs may then repeat the ranging process by sending the localization sequence again, each applying its own random delay. This time, the OLT detects sub-sequence S2 from the dominant ONU at T_{sub_2}. As shown in Fig. 7, this may be repeated for averaging to increase detection reliability. From the detected sub-sequences S₁ and S₂ the OLT can determine the delay chosen by the strong ONU: T_{rnd} = T_{sub_1} - T_{sub_2}. In particular, the measured shift of sub-sequence position at the OLT yields the amount of random delay chosen by the ONU: T_{rnd} = T_{sub_1} - T_{sub_2}. The OLT may report the measured T_{rnd} to the ONUs such that the ONUs can identify which one has been detected by the OLT and is promoted to ranging. By comparing with their respective T_{rnd} the ONUs know whether they are the one that was discovered by the OLT. The one ONU with matching T_{rnd} may join for the serial number acquisition and micro-ranging phase.

Thereafter, the OLT may request the (still unknown) ONU to transmit the localization sequence immediately (or after a pre-defined time interval) after receiving the downstream frame. From this point onward, the process may be continued as described with reference to case a) above. Alternatively, the ONUs may each apply a predetermined delay (e.g. derived from its unique localization number) which delays are also known to the OLT. In this case, the OLT may determine the localization of the dominant ONU from the measured delay T_{rnd}.

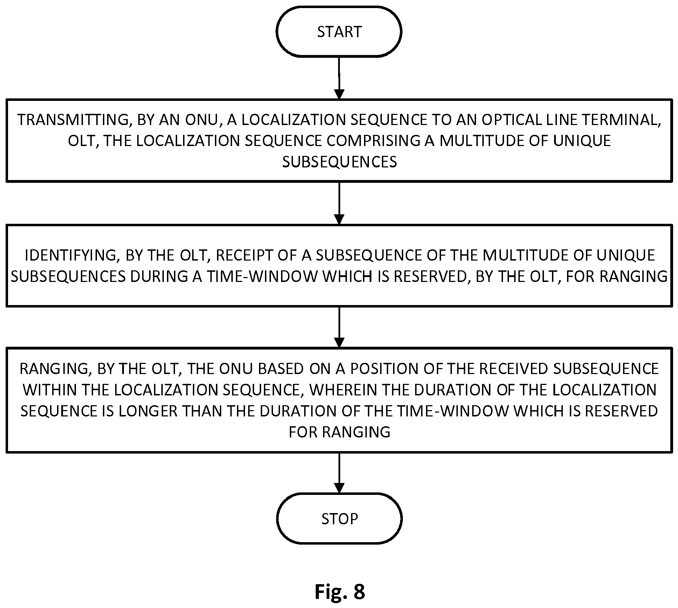

Fig. 8 illustrates a flow-chart of a process for initial (coarse) ranging. The process may start after an ONU has been singled-out with instructing the ONU to transmit the localization sequence. After identifying the subsequence which has been received during the empty window, the OLT may determine the round-trip delay and use this information for the initial (coarse) ranging. As described above, the initial ranging may comprise averaging over multiple upstream transmission windows and be used in a conventional ranging process to follow-up. By this, the length of the empty window can be substantially reduced and made independent of the round-trip time variation within the group of ONUs.

While during the process of 'Serial Number Acquisition' according to ITU-T G.989.3 the serial number is sent during the selection of a single ONU from a group of possibly several ONUs that want to register, this cannot be done in the proposed approach because the number of bits that can be sent at 10 Mb / s in 3.5 µs is too small. This step will be made later if the bitrate is increased to the normal transmission value.

Just as with regular ranging (cf. G.989.3), only a single ONU is addressed to measure its distance from the OLT and assign a corresponding equalization delay. A respective delay is assigned to each ONU for delaying its transmission timing in such a way that all ONUs have virtually the same distance to the OLT.

The proposed registration process may comprise two steps, with the first step involving the possibility of "pre-registered ONUs" as a special case, which may be addressed differently, as described above. In either case, in the second step, the isolated ONU is then asked to send the localization sequence that can be used to determine its distance from the OLT. After this coarse ranging (accuracy approx. 50 - 100 ns), a final step may take place, which may be largely identical to the standardized ranging: Transmission of a burst at full bitrate and full power, but sent so that the burst, at the OLT, in any case falls into the empty window. This can be done using the rough timing information of the previous step. This fine-ranging step may be preceded by the additional step of transmitting the serial number.

In another example, the registration (ranging) of ONUs may have 4 steps:
1) discovery (without knowledge of ONU serial numbers; only in case of pre-registered ONUs, the OLT knows the identity of the singled out ONU) at 10 Mb/s
2) coarse ranging at 10 Mb/s
3) serial number acquisition and assignment of ONU-IDs (only in case of unknown ONUs) at 10 Gb/s
4) fine-ranging at 10 Gb/s (including receipt of burst at OLT within empty window)

As explained in section 13.1 of ITU-T G.989.3, a quiet window must be reserved for the steps of discovery and ranging, which corresponds to the round trip time in the PON plus an offset (2 µs + 48 µs). The round-trip time across the fiber is determined by the shortest and longest distance between the OLT and the various ONUs. For example, if one chooses 0 km and 20 km (or 0 km and 40 km) for the shortest and longest distance, the differential distance = 20 km (or 40* km). This leads to unacceptable delays of 250 µs (or 450 µs) for latency-critical applications. Only if the fiber network can be narrowed precisely with respect to shorter differential distances, these delay values be reduced. 50 µs are always required for the discovery phase (2 µs + 48 µs). However, this possible shortening requires a situation in which all ONUs are located in a narrow distance range. And this distance must already be known exactly before the discovery and ranging phases.

All this is not necessary for the proposed ranging method. The empty window is much smaller, e.g., only 3.5 µs, independent of how large the absolute or the differential distance of ONUs in the PON is. Usage of a localization sequence which is (much) larger than the empty window allows precise determination of a sub-sequence that is received by the OLT during the empty window and, hence, determination of the signal round trip time for a ONU. Furthermore, the latency of already activated ONUs is not adversely affected by the activation of new ONUs, i.e. their latency is not increased by this process.

In this regard, it should be noted that the description and drawings merely illustrate the principles of the proposed method and devices. Those skilled in the art will be able to implement various arrangements that, although not explicitly described or shown herein, embody the principles of the invention as claimed. Furthermore, all examples and embodiment outlined in the present document are principally intended expressly to be only for explanatory purposes to help the reader in understanding the principles of the concept.

The present invention may be embodied in other specific devices and/or methods. The described embodiments are to be considered in all respects as only illustrative and not restrictive. In particular, the scope of the invention is indicated by the appended claims rather than by the description and figures herein.

### List of abbreviations

PON: Passive Optical Network
T(W)DM-PON: Time (and Wavelength) Division Multiplexed PON
GPON: Gigabit PON
XGS-PON: 10 Gbit/s Symmetric PON
OLT: Optical Line Termination
ONU: Optical Network Unit
PRBS: Pseudo-Random Bit Sequence
m-sequence: maximal length sequence
URLLC: Ultra-Reliable Low Latency Communication

## Claims

1. A method of ranging an optical network unit, ONU, in a time division multiplexing, TDM, passive optical network, PON, the method comprising:
transmitting, by the ONU, a localization sequence to an optical line terminal, OLT, the localization sequence comprising a multitude of unique subsequences allowing the OLT to uniquely identify the position of any subsequence relative to the start of the localization sequence;
detecting, by the OLT, a subsequence of the multitude of unique subsequences during a time-window which is reserved, by the OLT, for ranging, wherein the time-window is shorter than the maximum variation in ONU round-trip-time, the maximum variation in ONU round-trip-time being the difference between the maximum round-trip time for the optical network unit, ONU, which is placed at a maximum distance from the OLT within the PON, and the minimum round-trip time for the ONU which is placed at the minimum distance from the OLT within the PON; and
ranging, by the OLT, the ONU based on a position of the detected subsequence within the localization sequence,
wherein the duration of the localization sequence is longer than the duration of the time-window which is reserved for ranging.

2. The method of claim 1, wherein the duration of the time window which is reserved for ranging is independent of a variation of round-trip delays associated with different ONUs within the TDM-PON.

3. The method of any one of claims 1 to 2, wherein ONU activation data transmitted to the OLT is organized in upstream transmission windows and more than one upstream transmission window comprises a time-window which is reserved for ranging.

4. The method of claim 3, wherein the duration of the localization sequence is substantially equal to the duration of one upstream transmission window.

5. The method of claim 3 or 4, further comprising:
detecting, by the OLT, transmissions of multiple localization sequences from different ONUs during one upstream transmission window; and
transmitting, by the OLT, a request to delay a retransmission of one or more of said multiple localization sequences by a fixed or random number of upstream transmission windows.

6. The method of any one of claims 3 to 5, further comprising:
re-transmitting, by the ONU, the localization sequence in a later upstream transmission window to the OLT, wherein the localization sequence is re-transmitted with a delay within the upstream transmission window;
detecting, by the OLT, another subsequence of the re-transmitted localization sequence within the reserved time-window;
determining the delay, by the OLT, based on the position of the subsequence and the position of the other subsequence detected within the reserved time-window of the respective upstream transmission window; and
identifying the ONU based on the delay.

7. The method of any one of claims 1 to 6, wherein a plurality of ONUs are registered in the PON and the OLT repeatedly polls subgroups of ONUs to send test signals such as to iteratively request ONUs to stop transmitting the localization sequence until a single ONU has been singled-out.

8. The method of any one of claims 1 to 7, wherein the ONU transmits the localization sequence to the OLT during ranging at a first transmission power, and the ranged ONU subsequently transmits data to the OLT at a second transmission power, wherein the second transmission power is larger than the first transmission power.

9. The method of any one of claims 1 to 8, further comprising:
transmitting, by the ONU, localization signals corresponding to the localization sequence at least twice in consecutive upstream transmission windows to the OLT,
receiving, by the OLT, the localization signals in consecutive upstream transmission windows, and wherein the step of ranging the ONU is performed based on averaged localization signals received in a plurality of time windows in the consecutive upstream transmission windows.

10. An optical line terminal, OLT, for use in a time division multiplexing, TDM, passive optical network, PON, where ONU activation data to the OLT is organized in upstream transmission windows, the OLT being configured to:
reserve a time-window within an upstream transmission window for ranging, wherein the time-window is shorter than the maximum variation in ONU round-trip-time, the maximum variation in ONU round-trip-time being the difference between the maximum round-trip time for the optical network unit, ONU, which is placed at a maximum distance from the OLT within the PON, and the minimum round-trip time for the ONU which is placed at the minimum distance from the OLT within the PON;
detect a subsequence of a localization sequence received from an ONU during the reserved time-window; and
range the ONU based on a position of the detected subsequence relative to the start of the localization sequence,
wherein the duration of the localization sequence is longer than the duration of the time-window which is reserved for ranging.

11. The OLT of claim 10, comprising:
a multi-rate receiver; or
a first optical receiver for receiving optical signals during the time-window which is reserved for ranging; and a second optical receiver, different from the first optical receiver, for receiving optical signals during a data transmission window before and/or after the time-window reserved for ranging.

12. The OLT of claim 10 or 11, the OLT being further configured to:
average a plurality of localization signals from the ONU received during multiple time-windows reserved for ranging in multiple upstream transmission windows; and
calculate an equalization delay of the ONU based on the averaged localization signals.

13. An optical network unit, ONU, for use in a time division multiplexing, TDM, passive optical network, PON, where upstream data traffic to an optical line terminal, OLT, is organized in upstream PON frames, the ONU being configured to:
transmit a localization sequence to the OLT at a first transmission power, the localization sequence comprising a multitude of unique subsequences allowing the OLT to uniquely identify in a time-window reserved for ranging the ONU the position of any subsequence relative to the start of the localization sequence, the transmission duration of the localization sequence being larger than the duration of said time-window, and wherein the time-window is shorter than the maximum variation in ONU round-trip-time, the maximum variation in ONU round-trip-time being the difference between the maximum round-trip time for the optical network unit, ONU, which is placed at a maximum distance from the OLT within the PON, and the minimum round-trip time for the ONU which is placed at the minimum distance from the OLT;
receive an indication of an equalization delay from the OLT; and
transmit upstream data at a second transmission power, higher than the first transmission power, at a start time in an upstream PON frame;
wherein the start time in the upstream PON frame is determined based on the received equalization delay.

14. The ONU of claim 13, wherein ONU activation data is organized in upstream transmission windows, the ONU being further configured to:
delay a retransmission of a localization sequence in a succeeding upstream transmission window by a fixed or random number of upstream transmission windows in response to a corresponding request received from the OLT.

15. The ONU of claim 13 or 14, the ONU being further configured to:
after transmitting a localization sequence to the OLT, re-transmit the localization sequence to the OLT, wherein the re-transmitted localization sequence is transmitted with a random delay chosen by the ONU within the upstream transmission window;
receive a message from the OLT indicating a delay value associated with receipt of a localization sequence; and
determine whether the received delay value matches the chosen random delay, and in the affirmative determine that the OLT has detected the localization sequences sent from the ONU.

## Patentansprüche

1. Verfahren zum Klassifizieren einer optischen Netzwerkeinheit, ONU, in einem passiven optischen Zeitmultiplexnetzwerk, TDM-PON, wobei das Verfahren umfasst:
Übertragen durch die ONU einer Lokalisierungssequenz an ein Endgerät einer optischen Leitung, OLT, wobei die Lokalisierungssequenz eine Vielzahl von eindeutigen Teilsequenzen umfasst, die dem OLT erlauben, die Position von jeder Teilsequenz relativ zu dem Start der Lokalisierungssequenz eindeutig zu identifizieren;
Erkennen, durch das OLT, einer Teilsequenz aus der Vielzahl von eindeutigen Teilsequenzen während eines Zeitfensters, das durch das OLT für ein Klassifizieren reserviert wird, wobei das Zeitfenster kürzer ist, als die maximale Variation der ONU-Umlaufzeit, wobei die maximale Variation der ONU-Umlaufzeit die Differenz zwischen der maximalen Umlaufzeit für die optische Netzwerkeinheit, ONU, die in einer maximalen Entfernung von dem OLT innerhalb des PON angebracht ist, und der minimalen Umlaufzeit für die ONU ist, die in einer minimalen Entfernung von dem OLT innerhalb des PON angebracht ist; und
Klassifizieren, durch das OLT, der ONU aufgrund einer Position der erkannten Teilsequenz innerhalb der Lokalisierungssequenz, wobei die Dauer der Lokalisierungssequenz länger als die Dauer des Zeitfensters ist, das für das Klassifizieren reserviert ist.

2. Verfahren nach Anspruch 1, wobei die Dauer des Zeitfensters ist, das für das Klassifizieren reserviert ist, unabhängig von einer Variation von Umlaufverzögerungen ist, die innerhalb des TDM-PON verschiedenen ONUs zugeordnet sind.

3. Verfahren nach einem der Ansprüche 1 bis 2, wobei ONU-Aktivierungsdaten, die an das OLT übertragen werden, in Upstream-Übertragungsfenstern organisiert sind, und wobei mehr als ein Upstream-Übertragungsfenster ein Zeitfenster umfasst, das für das Klassifizieren reserviert ist.

4. Verfahren nach Anspruch 3, wobei die Dauer der Lokalisierungssequenz im Wesentlichen gleich der Dauer eines Upstream-Übertragungsfensters ist.

5. Verfahren nach Anspruch 3 oder 4, das außerdem umfasst:
Erkennen, durch das OLT, der Übertragungen mehrerer Lokalisierungssequenzen von verschiedenen ONUs während eines Upstream-Übertragungsfensters; und
Übertragen, durch das OLT, einer Anfrage zum Verzögern einer Neuübertragung von einer oder mehreren der mehreren Lokalisierungssequenzen mithilfe einer festen oder zufälligen Anzahl von Upstream-Übertragungsfenstern.

6. Verfahren nach einem der Ansprüche 3 bis 5, das außerdem umfasst:
Neuübertragen, durch die ONU, der Lokalisierungssequenz in einem späteren Upstream-Übertragungsfenster an das OLT, wobei die Lokalisierungssequenz mit einer Verzögerung innerhalb des Upstream-Übertragungsfensters neuübertragen wird;
Erkennen, durch das OLT, einer weiteren Teilsequenz der neuübertragenen Lokalisierungssequenz innerhalb des reservierten Zeitfensters;
Ermitteln der Verzögerung, durch das OLT, aufgrund der Position der Teilsequenz und der Position der weiteren Teilsequenz, die innerhalb des reservierten Zeitfensters des entsprechenden Upstream-Übertragungsfensters erkannt wurden; und
Identifizieren der ONU aufgrund der Verzögerung.

7. Verfahren nach einem der Ansprüche 1 bis 6, wobei eine Vielzahl von ONUs in dem PON registriert sind und wobei das OLT wiederholt Teilgruppen von ONUs abfragt, um Testsignale zu senden, sodass die ONUs iterativ aufgefordert werden, das Übertragen der Lokalisierungssequenz zu stoppen, bis eine einzige ONU ausgewählt wurde.

8. Verfahren nach einem der Ansprüche 1 bis 7, wobei die ONU die Lokalisierungssequenz während des Klassifizierens einer ersten Übertragungsleistung an das OLT überträgt, und wobei die klassifizierte ONU nachfolgend Daten mit einer zweiten Übertragungsleistung an das OLT sendet, wobei die zweite Übertragungsleistung größer als die erste Übertragungsleistung ist.

9. Verfahren nach einem der Ansprüche 1 bis 8, das außerdem umfasst:
Übertragen, durch die ONU, von Lokalisierungssignalen, die der Lokalisierungssequenz entsprechen, mindestens zweimal in aufeinanderfolgenden Upstream-Übertragungsfenstern an das OLT,
Empfangen, in der OLT, der Lokalisierungssignale in aufeinanderfolgenden Upstream-Übertragungsfenstern, und wobei der Schritt des Klassifizierens der ONU aufgrund von gemittelten Lokalisierungssignalen in einer Vielzahl von Zeitfenstern in den aufeinanderfolgenden Upstream-Übertragungsfenstern ausgeführt wird.

10. Endgerät einer optischen Leitung, OLT, für eine Verwendung in einem passiven optischen Zeitmultiplexnetzwerk, TDM-PON, wobei ONU-Aktivierungsdaten für das OLT in Upstream-Übertragungsfenstern organisiert sind, wobei das OLT konfiguriert ist zum:
Reservieren eines Zeitfensters zum Klassifizieren innerhalb eines Upstream-Übertragungsfensters, wobei das Zeitfenster kürzer ist, als die maximale Variation der ONU-Umlaufzeit, wobei die maximale Variation der ONU-Umlaufzeit die Differenz zwischen der maximalen Umlaufzeit für die optische Netzwerkeinheit, ONU, die in einer maximalen Entfernung von dem OLT innerhalb des PON angebracht ist, und der minimalen Umlaufzeit für die ONU ist, die in einer minimalen Entfernung von dem OLT innerhalb des PON angebracht ist;
Erkennen einer Teilsequenz einer Lokalisierungssequenz, die von einem ONU während des reservierten Zeitfensters empfangen wird; und
Klassifizieren der ONU aufgrund einer Position der erkannten Teilsequenz in Bezug auf den Start der Lokalisierungssequenz, wobei die Dauer der Lokalisierungssequenz länger als die Dauer eines Zeitfensters ist, das für das Klassifizieren reserviert ist.

11. OLT nach Anspruch 10, umfassend:
einen Mehrratenempfänger; oder
einen ersten optischen Empfänger zum Empfangen optischer Signale während des Zeitfensters, das für das Klassifizieren reserviert ist; und einen zweiten optischen Empfänger, der verschieden von dem ersten optischen Empfänger ist, zum Empfangen von optischen Signalen während eines Datenübertragungsfensters vor und/oder nach dem Zeitfenster, das für das Klassifizieren reserviert ist.

12. OLT nach Anspruch 10 oder 11, wobei das OLT außerdem konfiguriert ist zum:
Mitteln einer Vielzahl von Lokalisierungssignalen von dem ONU, die während mehrerer Zeitfenster, die für das Klassifizieren reserviert sind, in mehreren Upstream-Übertragungsfenstern empfangen werden; und
Berechnen einer Ausgleichsverzögerung der ONU aufgrund der gemittelten Lokalisierungssignale.

13. Optische Netzwerkeinheit, ONU, für eine Verwendung in einem passiven optischen Zeitmultiplexnetzwerk, TDM-PON, wobei ein Upstream-Datenverkehr zu einem Endgerät einer optischen Leitung, OLT, in Upstream-PON-Frames organisiert ist, wobei das ONU konfiguriert zum:
Übertragen einer Lokalisierungssequenz mit einer ersten Übertragungsleistung an das OLT, wobei die Lokalisierungssequenz eine Vielzahl von eindeutigen Teilsequenzen umfasst, die dem OLT erlauben, die Position von jeder Teilsequenz relativ zu dem Start der Lokalisierungssequenz in einem Zeitfenster eindeutig zu identifizieren, das für ein Klassifizieren der ONU reserviert ist, wobei die Übertragungsdauer der Lokalisierungssequenz länger als die Dauer des Zeitfensters ist, und wobei das Zeitfenster kürzer ist, als die maximale Variation der ONU-Umlaufzeit, wobei die maximale Variation der ONU-Umlaufzeit die Differenz zwischen der maximalen Umlaufzeit für die optische Netzwerkeinheit, ONU, die in einer maximalen Entfernung von dem OLT innerhalb des PON angebracht ist, und der minimalen Umlaufzeit für die ONU ist, die in einer minimalen Entfernung von dem OLT angebracht ist;
Empfangen einer Anzeige einer Ausgleichsverzögerung von dem OLT; und
Übertragen von Upstream-Daten mit einer zweiten Übertragungsleistung, die höher als die erste Übertragungsleistung ist, an einem Startzeitpunkt in einem Upstream-PON-Frame;
wobei der Startzeitpunkt in dem Upstream-PON-Frame aufgrund der empfangenen Ausgleichsverzögerung ermittelt wird.

14. ONU nach Anspruch 13, wobei die ONU-Aktivierungsdaten in Upstream-Übertragungsfenstern organisiert sind, wobei das ONU außerdem konfiguriert ist zum:
Verzögern einer Neuübertragung einer Lokalisierungssequenz in einem nachfolgenden Upstream-Übertragungsfenster mithilfe einer festen oder zufälligen Anzahl von Upstream-Übertragungsfenstern als Reaktion auf eine entsprechende Anfrage, die von dem OLT empfangen wird.

15. ONU nach Anspruch 13 oder 14, wobei das ONU außerdem konfiguriert ist zum:
nach dem Übertragen einer Lokalisierungssequenz an das OLT, Neuübertragen der Lokalisierungssequenz an das OLT, wobei die neuübertragene Lokalisierungssequenz mit einer zufälligen von der ONU gewählten Verzögerung innerhalb des Upstream-Übertragungsfensters übertragen wird;
Empfangen einer Nachricht von dem OLT, die einen Verzögerungswert anzeigt, der dem Empfang der Lokalisierungssequenz zugeordnet ist; und
Ermitteln, ob die empfangene Verzögerung mit der gewählten zufälligen Verzögerung übereinstimmt, und falls ja, Ermitteln, dass das OLT die Lokalisierungssequenzen erkannt hat, die von der ONU gesendet wurden.

## Revendications

1. Procédé de localisation d'une unité de réseau optique, ONU, dans un réseau optique passif, PON, à multiplexage par répartition dans le temps, TDM, le procédé comprenant :
la transmission, par l'ONU, d'une séquence de localisation à un terminal de ligne optique, OLT, la séquence de localisation comprenant une multitude de sous-séquences uniques permettant à l'OLT d'identifier de façon unique la position de n'importe quelle sous-séquence par rapport au début de la séquence de localisation ;
la détection, par l'OLT, d'une sous-séquence de la multitude de sous-séquences uniques dans une fenêtre temporelle qui est réservée, par l'OLT, à la localisation, la fenêtre temporelle étant plus courte que la variation maximale de temps de propagation aller et retour d'ONU, la variation maximale de temps de propagation aller et retour d'ONU étant la différence entre le temps de propagation aller et retour maximal pour l'unité de réseau optique, ONU, qui est placée à une distance maximale de l'OLT à l'intérieur du PON, et le temps de propagation aller et retour minimal pour l'ONU qui est placée à la distance minimale de l'OLT à l'intérieur du PON ; et
la localisation, par l'OLT, de l'ONU sur la base d'une position de la sous-séquence détectée à l'intérieur de la séquence de localisation,
dans lequel la durée de la séquence de localisation est plus longue que la durée de la fenêtre temporelle qui est réservée à la localisation.

2. Procédé de la revendication 1, dans lequel la durée de la fenêtre temporelle qui est réservée à la localisation est indépendante d'une variation de délais de propagation aller et retour associés à différentes ONU à l'intérieur du TDM-PON.

3. Procédé de l'une quelconque des revendications 1 à 2, dans lequel des données d'activation d'ONU transmises à l'OLT sont organisées dans des fenêtres de transmission amont et plus d'une fenêtre de transmission amont comprend une fenêtre temporelle qui est réservée à la localisation.

4. Procédé de la revendication 3, dans lequel la durée de la séquence de localisation est sensiblement égale à la durée d'une fenêtre de transmission amont.

5. Procédé de la revendication 3 ou 4, comprenant en outre :
la détection, par l'OLT, de transmissions de multiples séquences de localisation depuis différentes ONU dans une fenêtre de transmission amont ; et
la transmission, par l'OLT, d'une requête pour retarder une retransmission d'une ou plusieurs desdites multiples séquences de localisation par un nombre fixe ou aléatoire de fenêtres de transmission amont.

6. Procédé de l'une quelconque des revendications 3 à 5, comprenant en outre :
la retransmission, par l'ONU, de la séquence de localisation dans une fenêtre de transmission amont ultérieure à l'OLT, la séquence de localisation étant retransmise avec un retard à l'intérieur de la fenêtre de transmission amont ;
la détection, par l'OLT, d'une autre sous-séquence de la séquence de localisation retransmise à l'intérieur de la fenêtre temporelle réservée ;
la détermination du retard, par l'OLT, sur la base de la position de la sous-séquence et de la position de l'autre sous-séquence détectée à l'intérieur de la fenêtre temporelle réservée de la fenêtre de transmission amont respective ; et
l'identification de l'ONU sur la base du retard.

7. Procédé de l'une quelconque des revendications 1 à 6, dans lequel une pluralité d'ONU sont enregistrées dans le PON et l'OLT invite de façon répétée des sous-groupes d'ONU à envoyer des signaux d'essai de manière à demander itérativement à des ONU d'arrêter de transmettre la séquence de localisation jusqu'à ce qu'une ONU individuelle ait été repérée.

8. Procédé de l'une quelconque des revendications 1 à 7, dans lequel l'ONU transmet la séquence de localisation à l'OLT pendant la localisation à une première puissance de transmission, et l'ONU localisée transmet ensuite des données à l'OLT à une deuxième puissance de transmission, la deuxième puissance de transmission étant supérieure à la première puissance de transmission.

9. Procédé de l'une quelconque des revendications 1 à 8, comprenant en outre :
la transmission, par l'ONU, de signaux de localisation correspondant à la séquence de localisation au moins deux fois dans des fenêtres de transmission amont consécutives à l'OLT,
la réception, par l'OLT, des signaux de localisation dans des fenêtres de transmission amont consécutives, et dans lequel l'étape de localisation de l'ONU est effectuée sur la base de signaux de localisation moyennés reçus dans une pluralité de fenêtres temporelles dans les fenêtres de transmission amont consécutives.

10. Terminal de ligne optique, OLT, à utiliser dans un réseau optique passif, PON, à multiplexage par répartition dans le temps, TDM, où des données d'activation d'ONU transmises à l'OLT sont organisées dans des fenêtres de transmission amont, l'OLT étant configuré pour :
réserver une fenêtre temporelle à l'intérieur d'une fenêtre de transmission amont pour la localisation, la fenêtre temporelle étant plus courte que la variation maximale de temps de propagation aller et retour d'ONU, la variation maximale de temps de propagation aller et retour d'ONU étant la différence entre le temps de propagation aller et retour maximal pour l'unité de réseau optique, ONU, qui est placée à une distance maximale de l'OLT à l'intérieur du PON, et le temps de propagation aller et retour minimal pour l'ONU qui est placée à la distance minimale de l'OLT à l'intérieur du PON ;
détecter une sous-séquence d'une séquence de localisation reçue depuis une ONU dans la fenêtre temporelle réservée ; et
localiser l'ONU sur la base d'une position de la sous-séquence détectée par rapport au début de la séquence de localisation,
dans lequel la durée de la séquence de localisation est plus longue que la durée de la fenêtre temporelle qui est réservée à la localisation.

11. OLT de la revendication 10, comprenant :
un récepteur multidébit ; ou
un premier récepteur optique destiné à recevoir des signaux optiques dans la fenêtre temporelle qui est réservée à la localisation ; et un deuxième récepteur optique, différent du premier récepteur optique, destiné à recevoir des signaux optiques dans une fenêtre de transmission de données avant et/ou après la fenêtre temporelle réservée à la localisation.

12. OLT de la revendication 10 ou 11, l'OLT étant en outre configuré pour :
moyenner une pluralité de signaux de localisation en provenance de l'ONU reçus dans de multiples fenêtres temporelles réservées à la localisation dans de multiples fenêtres de transmission amont ; et
calculer un retard d'égalisation de l'ONU sur la base des signaux de localisation moyennés.

13. Unité de réseau optique, ONU, à utiliser dans un réseau optique passif, PON, à multiplexage par répartition dans le temps, TDM, où un trafic de données amont jusqu'à un terminal de ligne optique, OLT, est organisé dans des trames PON amont, l'ONU étant configurée pour :
transmettre une séquence de localisation à l'OLT à une première puissance de transmission, la séquence de localisation comprenant une multitude de sous-séquences uniques permettant à l'OLT d'identifier de façon unique dans une fenêtre temporelle réservée à la localisation de l'ONU la position de n'importe quelle sous-séquence par rapport au début de la séquence de localisation, la durée de transmission de la séquence de localisation étant supérieure à la durée de ladite fenêtre temporelle, et la fenêtre temporelle étant plus courte que la variation maximale de temps de propagation aller et retour d'ONU, la variation maximale de temps de propagation aller et retour d'ONU étant la différence entre le temps de propagation aller et retour maximal pour l'unité de réseau optique, ONU, qui est placée à une distance maximale de l'OLT à l'intérieur du PON, et le temps de propagation aller et retour minimal pour l'ONU qui est placée à la distance minimale de l'OLT;
recevoir une indication d'un retard d'égalisation en provenance de l'OLT ; et
transmettre des données amont à une deuxième puissance de transmission, supérieure à la première puissance de transmission, à un temps de début dans une trame PON amont ;
dans laquelle le temps de début dans la trame PON amont est déterminé sur la base du retard d'égalisation reçu.

14. ONU de la revendication 13, des données d'activation d'ONU étant organisées dans des fenêtres de transmission amont, l'ONU étant en outre configurée pour :
retarder une retransmission d'une séquence de localisation dans une fenêtre de transmission amont suivante par un nombre fixe ou aléatoire de fenêtres de transmission amont en réponse à une requête correspondante reçue depuis l'OLT.

15. ONU de la revendication 13 ou 14, l'ONU étant en outre configurée pour :
après avoir transmis une séquence de localisation à l'OLT, retransmettre la séquence de localisation à l'OLT, la séquence de localisation retransmise étant transmise avec un retard aléatoire choisi par l'ONU à l'intérieur de la fenêtre de transmission amont ;
recevoir un message en provenance de l'OLT indiquant une valeur de retard associée à la réception d'une séquence de localisation ; et
déterminer si la valeur de retard reçue correspond au retard aléatoire choisi, et dans l'affirmative, déterminer que l'OLT a détecté les séquences de localisation envoyées depuis l'ONU.
